# EUROPEAN PATENT SPECIFICATION

(11) **EP 0 622 640 B1**
(45) Date of publication and mention of the grant of the patent: **16.06.1999**
(21) Application number: 93303430.8
(22) Date of filing: 30.04.1993
(51) Int. Cl.: G01S 15/04, G01S 7/52

(54) **Ultrasonic sensor**
Ultraschallsensor
Senseur à ultrasons

(43) Date of publication of application: 02.11.1994
(73) Proprietor: ALPHA CORPORATION, Yokohama-shi, Kanagawa-Pref., 236 (JP)
(72) Inventor: Takami, Ryoichi, c/o Technical Center, Yokohama-shi, Kanagawa-Pref. 211 (JP)
(74) Representative: Cardwell, Stuart Martin

(56) References cited:
- EP-A- 0 459 336
- EP-A- 0 459 925
- DE-A- 3 700 276
- GB-A- 2 050 022

## Description

This invention relates to unauthorized intrusion detection, in particular an ultrasonic sensor capable of varying a reference level used to produce required information from sensed ultrasonic signals.

For example, Japanese Patent Disclosure No. 3-61149 discloses an anti-theft device for driving an alarm device upon unauthorized opening of a lid in its closed condition. The anti-theft device of this type comprises a detection switch for detecting operation of a door, an alarm device, an alarm control circuit to operate the alarm device upon receiving a sensing signal from the detection switch. Preferably, the alarm device includes horn or headlights in a vehicle. Usually, the alarm control circuit is operable to change its mode to any of three armed, disarmed and alarming conditions. In the armed condition, the alarm control circuit may receive the sensing signal from the detection switch and thereby forward a drive signal to the alarm device. In the disarmed condition, the alarm control circuit can produce no drive signal for the alarm device. In the alarm condition, the control circuit continues to generate the drive signal so that the alarm device is successively operated for a certain period of time, for example three minutes. In some cases, an indicator for representing the armed condition is provided to produce blinking light by output of the alarm control circuit.

U.S. Patent No. 3,781,854 discloses a warning control circuit for automobiles wherein it is switched from disarmed to armed condition when all doors and lids are closed and locked by operation of cylinder lock devices. If there is a case of unauthorized opening of one of the doors, trunk rid or hood of the automobile in the armed condition, the control circuit automatically drives the warning device which therefore produces warning sound and light for anti-theft.

Also, known for example as shown by Japanese Patent Disclosure No. 62-98280 is ultrasonic detection means for detecting movement of an object utilizing ultrasonic wave which comprises an ultrasonic transmitter for generating ultrasonic wave; an ultrasonic receiver for receiving ultrasonic wave which is reflected on a surface of the object after emission from the transmitter; and a detecting circuit for extracting change in output signals of the receiver.

Now, there has been proposed an anti-theft device provided with an ultrasonic detecting sensor to detect unauthorized intrusion into interior of the automobile after break of window glass. The anti-theft device of this type comprises an ultrasonic transmitter for producing ultrasonic wave, a drive circuit for providing the transmitter with drive signals, an ultrasonic receiver for receiving ultrasonic wave which is emitted from the transmitter and then reflected on a surface of the object, and a judgment circuit for monitoring output of the receiver.

In attachment of prior art ultrasonic sensor to vehicles or buildings, electric adjustment is necessarily required due to different electric property between electric elements in manufacture and different volume of occupation space for the sensors. Specifically, higher sensitivity for ultrasonic wave in the receiver inconveniently results in increased error detection by the sensor. Adversely, lower sensitivity for ultrasonic wave in the receiver does not attain correct detection of a moving object. Accordingly, sensitivity must finely, precisely and carefully be adjusted in the ultrasonic transmitter and receiver by skilled person in response to different volume of space and arrangement of an object to be detected or other various factors when a kind of ultrasonic sensors is applied to various and different areas including vehicles and architecture.

DE-A-37 00 276 discloses a sensor including a level setting circuit for determining an initial reference level in response to an output signal of the ultrasonic receiver and for adjusting the reference level when the receiver output signal does not conform to the initial level.

It is an object of the present invention is to provide an improved ultrasonic sensor capable of automatically adjusting a reference level used to produce required information from sensed ultrasonic signals.

Accordingly the present invention provides an ultrasonic sensor comprising an ultrasonic transmitter for generating ultrasonic wave; a drive circuit for providing said transmitter with drive signals; an ultrasonic receiver for receiving ultrasonic wave which is generated from the transmitter and then reflected on a surface of an object and for converting the received ultrasonic wave into electric signals; a judgment circuit for comparing output from the receiver with a reference level to generate an output when the output from the receiver is higher than the reference level; and a control circuit for forwarding drive signals to the transmitter and for receiving output from said judgment circuit, said control circuit comprising level setting means for determining a first reference level in response to the output of the ultrasonic receiver and for varying the reference level to a second reference level when the output of the ultrasonic receiver does not conform to the first reference level; and characterised in that
said control circuit comprises a first timer for generating a first pulse of long pulse width to activate said drive circuit, a second timer for generating a second pulse to activate said drive circuit, said second pulse having a shorter pulse width than that of the first pulse generated by said first timer,
said ultrasonic transmitter being activated through said drive circuit by the second pulse generated when said second timer is intermittently activated several times after said first timer is activated,
and wherein when said ultrasonic receiver receives said first pulse from said first timer, said control circuit shifts said first reference level to said second reference level (step 49),
and when said control circuit receives an output from said judgment circuit, said control circuit shifts said second timer to said first timer for ultrasonic transmission and reception (step 60),
and when said ultrasonic receiver receives said first pulse and the frequency of the received ultrasonic wave is out of the predetermined range, said control circuit is changed from armed condition and warning condition (step 44).

The transmitter generates at constant time intervals ultrasonic waves which are reflected on the surface of the object and then received by the receiver.
To correctly hear echo reflected from the object by the receiver, receiving operation is ceased during a time period shorter than pulse duration of ultrasonic wave received from the transmitter. The level setting means automatically provides the other sensitive reference level when the output of the ultrasonic receiver does not conform to the initial reference level so that output of the receiver is always compared with the desirable reference level in the judgment circuit.

The control circuit is provided to receive output from the judgment circuit and to forward a level of the ultrasonic wave to the judgment circuit. The judgment circuit comprises a comparator which has a comparative input terminal connected to the receiver through a detecting circuit and a amplifier and a reference input terminal connected through a D/A converter to the control circuit. The control circuit is connected to a warning device to produce warning signal when the control circuit receives the ultrasonic wave including pulses over the reference level in amplitude. The control circuit stops supply of electric power to the transmitter and receiver for economy in power consumption when the warning device is operated. The control circuit has a timer for producing its output to cancel ultrasonic signals received by the receiver in order to prevent malfunction of the control circuit during a time period shorter than pulse duration of ultrasonic wave received from the transmitter.

This invention will now be further described, by way of example only, with reference to the accompanying drawings, in which;-
Figure 1 is a block diagram showing an example of the ultrasonic sensor according to the present invention;
Figure 2 shows timing charts indicating operation of the ultrasonic sensor of Figure 1;
Figure 3 is a flow chart indicating the operational sequence of the sensor of Figure 1; and
Figure 4 is a flow chart followed from Figure 3.

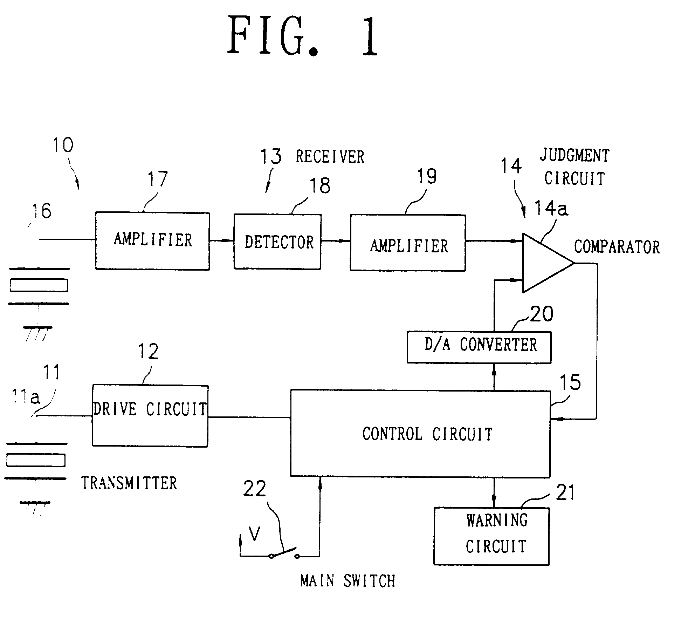

Referring now to Figure 1, the ultrasonic sensor 10 comprises an ultrasonic transmitter 11 for generating ultrasonic wave; a drive circuit 12 for providing the transmitter 11 with drive signals; an ultrasonic receiver 13 for receiving ultrasonic wave which is generated from the transmitter 11 and then reflected on a surface of an object and for converting the received ultrasonic wave into electric signals; and a judgment circuit 14 for comparing output from the receiver 13 with a variable reference level; and a control circuit 15 for receiving outputs of the judgment circuit 14. The transmitter 11 has a piezoelectric element 11a which generates ultrasonic wave of a given frequency range when voltage is applied to the element 11a from the drive circuit 12 which is controlled by outputs of the control circuit 15.

The receiver 13 comprises a piezoelectric element 16 for receiving ultrasonic wave of f a given frequency range; a first amplifier 17 for amplifying outputs of the piezoelectric element 16; a detection circuit 18 for detecting outputs of the first amplifier 17; a second amplifier 19 for amplifying outputs of the detection circuit 18. The judgment circuit 14 includes a comparator 14a which has a comparative input terminal connected to the second amplifier 19 and a reference input terminal connected through D/A (Digital Analog) converter 20 to the control circuit 15. Outputs of the comparator 14a are forwarded to the control circuit 15 which has an output terminal connected to a warning device 21 and an input terminal connected to a main switch 22 for supplying electric power.

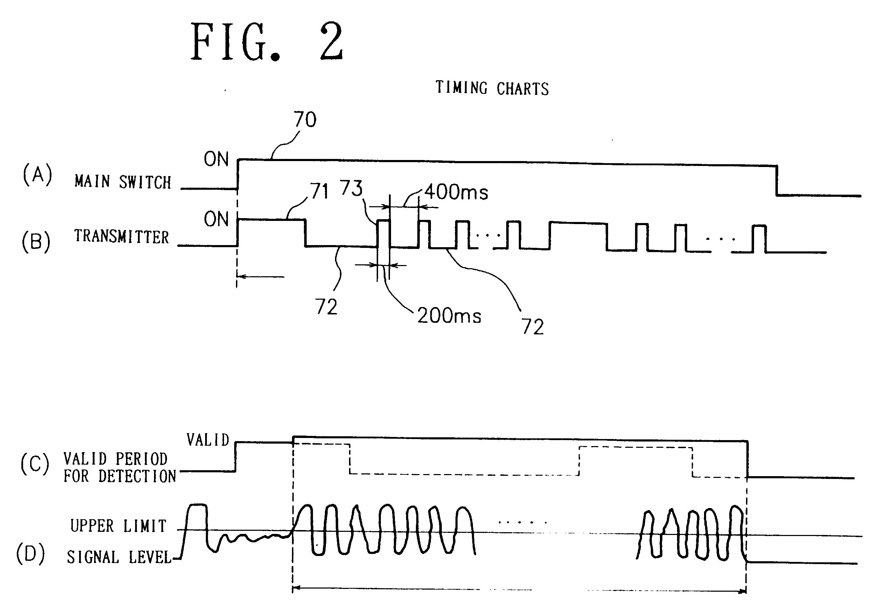

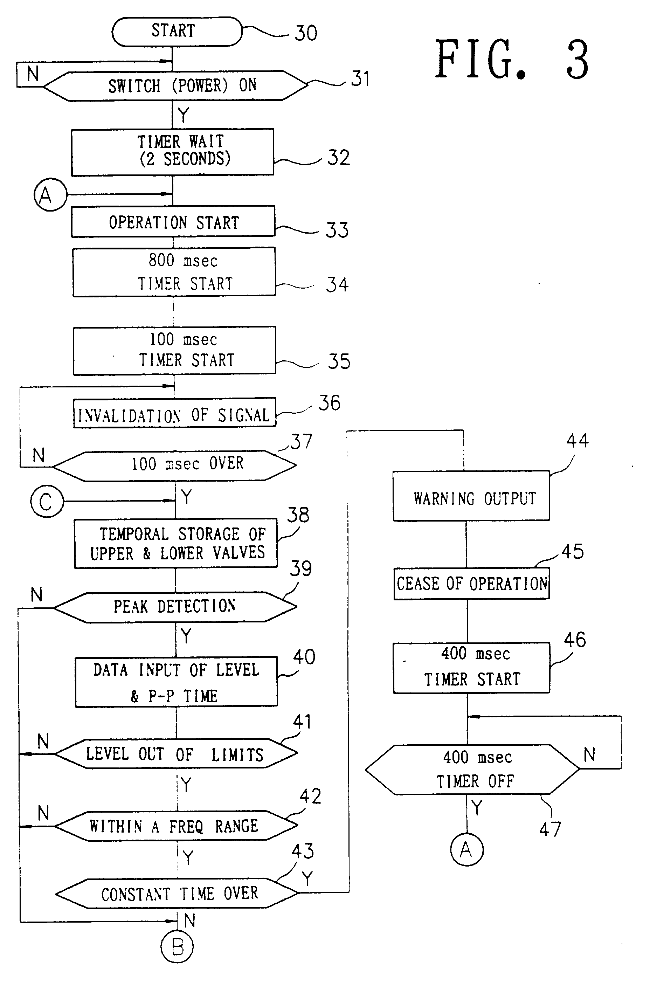

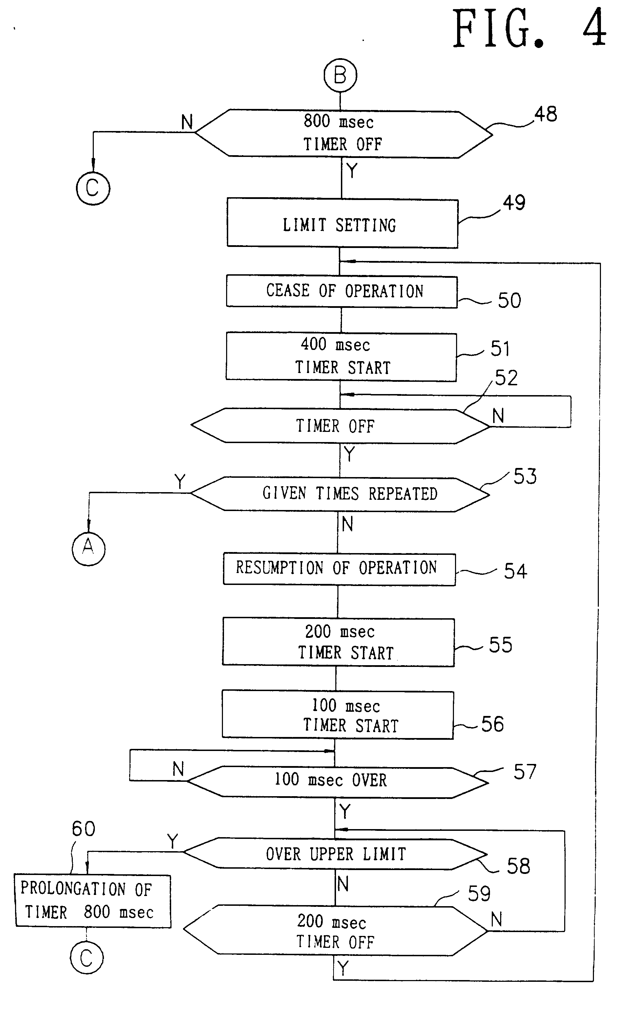

In use, the control circuit 15 is operated in accordance with the timing charts shown by Figure 2 and an operating sequence shown by flow charts of Figures 3 and 4.

Moving from Step 30 "START" to 31 of Figure 3, the main switch 22 is turned on to supply the control circuit 15 with electric power as shown by a rising pulse 70 of Figure 2 (A) so that, after counting of 2 seconds by a 2-second timer formed in the control circuit 15 in Step 32, the transmitter 11 and receiver 13 are started for generation and receiving of ultrasonic wave (Step 33). Subsequently, operated in Steps 34 and 35 are 800 millisecond and 100 millisecond timers both formed within the control circuit 15. Figure 2 indicates a pulse duration 71 of the 800 millisecond timer. To avoid effect by chattering in initially receiving the ultrasonic wave, the 100 millisecond timer produces its output to cancel ultrasonic signals which are received by the receiver 13, thus preventing malfunction of the control circuit 15 in Step 36. In Step 37, the control circuit 15 decides whether or not 100 milliseconds have passed. If 100 milliseconds have not yet passed, processing returns to Step 36.

Not shown, but the judgment circuit 14 of the sensor 10 includes level setting means for determining an initial reference level in response to the output of the ultrasonic receiver 13. When 100 milliseconds have passed in Step 37, firstly the judgment circuit 14 determines optionally or as a constant an upper or lower limit value for the ultrasonic wave as the initial reference level and then temporarily stores the determined value in Step 38. Figure 2 indicates the upper limit value which provides the initial reference level for positive pulses of the ultrasonic wave. Then, the level setting means automatically selects a further suitable reference level when the output of the ultrasonic receiver 13 does not conform to the previously determined initial reference level on the reason that it is too high or too low relative to the output of the ultrasonic receiver 13 so that the positive or negative peak can not be detected by the control circuit 15 and D/A convertor 20. Accordingly, if the judgment circuit 14 selects the further reference level in lieu of the initial reference level in response to the output of the ultrasonic receiver 13, the judgment circuit 14 can correctly and conveniently compare the output of the ultrasonic receiver 13 with the reset and suitable second reference level for peak determination.

Thereafter, the control circuit 15 detects the time period of peak to peak (P-P) of the received ultrasonic wave (Step 39) and stores these data therein (Step 40). The time period of P-P is used to provide a frequency of received ultrasonic wave signals by measuring a time length between positive peaks, between negative peaks or between positive through negative peaks of the ultrasonic signals. The control circuit 15 decides in Step 41 on whether peak levels in stored ultrasonic wave signals exceed the initial reference level in amplitude. If the sensed peak levels exceed the initial reference level, the control circuit 15 decides whether or not the frequency of the received ultrasonic wave is in a predetermined range (Step 42). If it is in the predetermined frequency range, the control circuit 15 determines in Step 43 for certain measurement whether or not the received ultrasonic wave of the frequency range has a sufficient time length over a constant period of time. When the control circuit 15 receives the ultrasonic wave including pulses of long duration, it regards the inputs over the reference level as unauthorized intrusion and therefore is automatically shifted from the armed to the warning condition. Then, the control circuit 15 forwards drive signals to the warning device 22 which therefore produces warning signals such as warning horn or light in Step 44. Simultaneously, in Step 45, the control circuit 15 stops supply of electric power to the transmitter 11 and receiver 13 for economy in power consumption. In Step 46, a 400 millisecond timer is driven to determine whether 400 milliseconds have passed or not. If the time has passed in Step 47, the processing returns to Step 33. Figure 2 indicates the time chart 72 of the 400 millisecond timer.

In Step 48, the control circuit 15 decides whether the 800 millisecond timer is turned off in case of:
1. when no peak is detected from the ultrasonic wave in Step 39,
2. when peak level of the ultrasonic wave stored in Step 41 does not exceed the set upper or lower level,
3. when the frequency of the received ultrasonic wave is out of the predetermined range in Step 42 and
4. when no continuous ultrasonic wave of given frequency is detected over the predetermined period of time and over the predetermined reference level in Step 43.

When the 800 millisecond timer is kept in ON condition, the processing returns to Step 38. Adversely, when the 800 millisecond timer is turned off, the upper or lower limit value of the ultrasonic wave is automatically set as an alternative reference level in Step 49 by automatically replacing the initial reference level with the second upper or lower limit value which represents the second reference level determined by a given calculating formula or previously stored pursuant to a program in the control circuit 15.

Then, stopping operation of the transmitter 11 and receiver 13 in Step 50, a 400 millisecond timer is started (Step 51). Subsequently, decision is made by the control circuit 15 whether or not the 400 millisecond timer is turned off. When the 400 millisecond timer is turned off, further decision is made whether or not operation of the 200 millisecond timer is repeated by given times (for instance 10 times) in Step 53. When the 200 millisecond timer is operated 10 times, processing moves from Step 53 to 33, and thereby transmission and receiving of ultrasonic wave are started and also the 800 millisecond timer is again operated in Step 34. When operation 73 of the 200 millisecond timer is not repeated by the given number in Step 53, transmission and receiving of ultrasonic wave are resumed and the 200 millisecond timer is operated. At the same time, the 100 millisecond timer is started (Step 56). Thus, the transmitter 11 of the ultrasonic sensor 10 generates ultrasonic wave which includes pulses of 200 milliseconds at time intervals of 400 milliseconds. The receiver 13 receives ultrasonic wave each time elapse of 100 milliseconds time interval shorter than 200 milliseconds of the pulse length for ultrasonic wave which is generated from the transmitter 11 because receiving of the ultrasonic wave is canceled during 100 milliseconds.

In Step 57, decision is made whether or not 100 milliseconds have passed to avoid effect by chattering similarly to the foregoing. After elapse of 100 milliseconds, further decision is made whether or not the received ultrasonic wave exceeds the second reference level in Step 58. If there is no signal which exceeds the second reference level, decision is still made whether the 200 millisecond timer is turned off in Step 59. In Step 59, when 200 milliseconds have not yet passed, the processing returns to Step 58. When 200 milliseconds have passed, the processing returns to Step 38 after count of the timer is prolonged to 800 milliseconds.

The foregoing embodiment of the invention may be varied in view of actual demands. For instance, following the second reference level, if this is not considered available by the control circuit 15, it may set a third or more reference level. In addition, the reference level in amplitude may be negative or of combined positive and negative levels.

As mentioned above, the ultrasonic sensor according to the present invention can automatically adjust the reference level so that it is unnecessary for an operator to individually adjust the reference level at the time of mounting the ultrasonic sensor which may accordingly be easily applied to various kind of objects of different space conditions.

## Claims

1. An ultrasonic sensor comprising an ultrasonic transmitter (11) for generating ultrasonic wave; a drive circuit (12) for providing said transmitter (11) with drive signals; an ultrasonic receiver (13) for receiving ultrasonic wave which is generated from the transmitter (11) and then reflected on a surface of an object and for converting the received ultrasonic wave into electric signals; a judgment circuit (14) for comparing output from the receiver (13) with a reference level to generate an output when the output from the receiver (13) is higher than the reference level; and a control circuit (15) for forwarding drive signals to the transmitter (11) and for receiving output from said judgment circuit (14), said control circuit (15) comprising level setting means for determining a first reference level in response to the output of the ultrasonic receiver (13) and for varying the reference level to a second reference level when the output of the ultrasonic receiver (13) does not conform to the first reference level; and characterised in that
said control circuit (15) comprises a first timer for generating a first pulse of long pulse width to activate said drive circuit (12), a second timer for generating a second pulse to activate said drive circuit (12), said second pulse having a shorter pulse width than that of the first pulse generated by said first timer,
said ultrasonic transmitter (11) being activated through said drive circuit (12) by the second pulse generated when said second timer is intermittently activated several times after said first timer is activated,
and wherein when said ultrasonic receiver (13) receives said first pulse from said first timer, said control circuit (15) shifts said first reference level to said second reference level (step 49),
and when said control circuit (15) receives an output from said judgment circuit (14), said control circuit (15) shifts said second timer to said first timer for ultrasonic transmission and reception (step 60),
and when said ultrasonic receiver (13) receives said first pulse and the frequency of the received ultrasonic wave is out of the predetermined range, said control circuit (15) is changed from armed condition to warning condition (step 44).

2. An ultrasonic sensor of claim 1, wherein the pulse width of the firs pulse generated by said first timer is 800 msec, and the pulse width of the second pulse generated by said second timer is 200 msec.

3. An ultrasonic sensor of claim 1 or 2, wherein said control circuit (15) has a third timer for generating a third pulse having a pulse width shorter than that of the second pulse generated by said second timer,
said third timer generating said third pulse when said first or second timer generates said first or second pulse so that said control circuit (15) cancels signals received by said ultrasonic receiver during occurrence of said third pulse.

4. An ultrasonic sensor as claimed in claim 3, wherein the pulse width of said third pulse generated by said third timer is 100 msec.

## Patentansprüche

1. Ultraschallsensor mit einem Ultraschallsender (11) zum Erzeugen einer Ultraschallwelle; einer Treiberschaltung (12) zum Bereitstellen von Antriebssignalen für den besagten Sender (11); einem Ultraschallempfänger (13) zum Empfangen einer Ultraschallwelle, die vom Sender (11) erzeugt und dann an einer Oberfläche eines Objekts reflektiert wird und zum Umwandeln der empfangenen Ultraschallwelle in elektrische Signale; einer Beurteilungsschaltung (14) zum Vergleichen der Ausgabe aus dem Empfänger (13) mit einem Bezugspegel zum Erzeugen einer Ausgabe, wenn die Ausgabe aus dem Empfänger (13) höher als der Bezugspegel ist; und einer Steuerschaltung (15) zum Weiterleiten von Antriebssignalen zum Sender (11) und zum Empfangen einer Ausgabe von der besagten Beurteilungsschaltung (14), wobei die besagte Steuerschaltung (15) Pegeleinstellmittel zum Bestimmen eines ersten Bezugspegels als Reaktion auf die Ausgabe des Ultraschallempfängers (13) und zum Verändern des Bezugspegels auf einen zweiten Bezugspegel, wenn die Ausgabe des Ultraschallempfängers (13) nicht dem ersten Bezugspegel entspricht, umfaßt; dadurch gekennzeichnet, daß
die besagte Steuerschaltung (15) einen ersten Zeitgeber zum Erzeugen eines ersten Impulses mit langer Impulsbreite zum Aktivieren der besagten Antriebsschaltung (12), einen zweiten Zeitgeber zum Erzeugen eines zweiten Impulses zum Aktivieren der besagten Antriebsschaltung (12) umfaßt, wobei der besagte zweite Impuls eine kleinere Impulsbreite als die des vom ersten Zeitgeber erzeugten ersten Impulses aufweist,
wobei der besagte Ultraschallsender (11) durch die besagte Antriebsschaltung (12) von dem zweiten Impuls aktiviert wird, der erzeugt wird, wenn der besagte zweite Zeitgeber intermittierend mehrmals nach Aktivieren des ersten Zeitgebers aktiviert wird,
und wobei, wenn der besagte Ultraschallempfänger (13) den besagten ersten Impuls vom besagten ersten Zeitgeber empfängt, die besagte Steuerschaltung (15) den besagten ersten Bezugspegel auf den besagten zweiten Bezugspegel verschiebt (Schritt 49),
und wenn die besagte Steuerschaltung (15) eine Ausgabe von der besagten Beurteilungsschaltung (14) empfängt, die besagte Steuerschaltung (15) den besagten zweiten Zeitgeber zum besagten ersten Zeitgeber für Ultraschallsendung und -empfang verschiebt (Schritt 60),
und wenn der besagte Ultraschallempfänger (13) den besagten ersten Impuls empfängt und die Frequenz der empfangenen Ultraschallwelle außerhalb des vorbestimmten Bereichs liegt, die besagte Steuerschaltung (15) aus dem Bereitzustand in den Warnzustand überführt wird (Schritt 44).

2. Ultraschallsensor nach Anspruch 1, wobei die Impulsbreite des vom besagten ersten Zeitgeber erzeugten ersten Impulses 800 msec beträgt und die Impulsbreite des vom zweiten Zeitgeber erzeugten zweiten Impulses 200 msec beträgt.

3. Ultraschallsensor nach Anspruch 1 oder 2, wobei die besagte Steuerschaltung (15) einen dritten Zeitgeber zum Erzeugen eines dritten Impulses mit einer kleineren Impulsbreite als der des vom besagten zweiten Zeitgeber erzeugten zweiten Impulses aufweist,
wobei der besagte dritte Zeitgeber den besagten dritten Impuls erzeugt, wenn der -besagte erste oder zweite Zeitgeber den besagten ersten bzw. zweiten Impuls erzeugt, so daß die besagte Steuerschaltung (15) vom besagten Ultraschallempfänger empfangene Signale während des Auftretens des besagten dritten Impulses löscht.

4. Ultraschallsensor nach Anspruch 3, wobei die Impulsbreite des besagten vom besagten dritten Zeitgeber erzeugten dritten Impulses 100 msec beträgt.

## Revendications

1. Capteur à ultrasons comprenant un transmetteur d'ultrasons (11) pour générer une onde d'ultrasons; un circuit d'attaque (12) pour fournir audit transmetteur (11) des signaux d'attaque ; un récepteur d'ultrasons (13) pour recevoir une onde d'ultrasons qui est générée du transmetteur (11) et puis réfléchie sur une surface d'un objet, et pour transformer ladite onde d'ultrasons reçue en signaux électriques ; un circuit d'estimation (14) pour comparer un signal de sortie du récepteur (13) avec un niveau de référence afin de générer un signal de sortie quand le signal de sortie du récepteur (13) est supérieur au niveau de référence ; et un circuit de commande (15) pour envoyer les signaux d'attaque au transmetteur (11) et pour recevoir un signal de sortie dudit circuit d'estimation (14), ledit circuit de commande (15) comprenant un moyen de détermination de niveau pour déterminer un premier niveau de référence en réponse au signal de sortie du récepteur d'ultrasons (13) et pour faire varier le niveau de référence par rapport à un deuxième niveau de référence quand le signal de sortie du récepteur d'ultrasons (13) n'est pas conforme au premier niveau de référence ; et caractérisé en ce que :
ledit circuit de commande (15) comprend une première minuterie pour générer une première impulsion de grande largeur d'impulsion afin d'activer le circuit d'attaque (12), une deuxième minuterie pour générer une deuxième impulsion afin d'activer ledit circuit d'attaque (12), ladite deuxième impulsion ayant une largeur d'impulsion plus courte que celle de la première impulsion générée par ladite première minuterie,
ledit transmetteur d'ultrasons (11) étant activé par l'intermédiaire dudit circuit d'attaque (12) par la deuxième impulsion générée quand ladite deuxième minuterie est activée de manière intermittente plusieurs fois après que ladite première minuterie est activée,
et dans lequel, lorsque ledit récepteur d'ultrasons (13) reçoit ladite première impulsion de ladite première minuterie, ledit circuit de commande (15) décale ledit premier niveau de référence par rapport audit deuxième niveau de référence (étape 49),
et, lorsque ledit circuit de commande (15) reçoit un signal de sortie dudit circuit d'estimation (14), ledit circuit de commande (15) décale ladite deuxième minuterie par rapport à ladite première minuterie en vue d'une transmission et d'une réception d'ultrasons (étape 60),
et, lorsque ledit récepteur d'ultrasons (13) reçoit ladite première impulsion et que la fréquence de l'onde d'ultrasons reçue se trouve hors de la plage prédéterminée, ledit circuit de commande (15) passe d'un état armé à un état d'alarme (étape 44).

2. Capteur à ultrasons selon la revendication 1, dans lequel la largeur d'impulsion de la première impulsion générée par ladite première minuterie est de 800 ms, et la largeur d'impulsion de la deuxième impulsion générée par ladite deuxième minuterie est de 200 ms.

3. Capteur à ultrasons selon la revendication 1 ou la revendication 2, dans lequel ledit circuit de commande (15) présente une troisième minuterie pour générer une troisième impulsion dont la largeur d'impulsion est plus courte que celle de la deuxième impulsion générée par ladite deuxième minuterie,
ladite troisième minuterie générant ladite troisième impulsion quand ladite première ou deuxième minuterie génère ladite première ou deuxième impulsion afin que ledit circuit de commande (15) annule les signaux reçus par ledit récepteur d'ultrasons durant la survenue de ladite troisième impulsion.

4. Capteur à ultrasons selon la revendication 3, dans lequel la largeur d'impulsion de ladite troisième impulsion générée par ladite troisième minuterie est de 100 ms.
